# EUROPEAN PATENT SPECIFICATION

(11) **EP 3 707 407 B1**
(45) Date of publication and mention of the grant of the patent: **21.09.2022**
(21) Application number: 18814705.2
(22) Date of filing: 05.11.2018
(51) Int. Cl.: F16G 13/10, B65G 17/38, B65G 39/20, F16G 13/18

(54) **CHAIN AND METHOD FOR LUBRICATION THEREOF**
KETTE UND VERFAHREN ZU DEREN SCHMIERUNG
CHAÎNE ET PROCÉDÉ DE LUBRIFICATION DE CELLE-CI

(30) Priority: 09.11.2017 NL 1042636
(43) Date of publication of application: 16.09.2020
(73) Proprietor: KETTINGTECHNIEK NEDERLAND B.V., 7468DC Enter (NL)
(72) Inventor: KOERS, Johannes Hendrikus, 7468 RT Enter (NL)
(74) Representative: Mink-Lindenburg, Charlotte Hildegard
(86) International application number: PCT/NL2018/000019
(87) International publication number: WO 2019/093876

(56) References cited:
- DE-C- 556 782
- GB-A- 2 123 518
- US-B1- 6 526 740

## Description

The invention relates to a chain comprising at least two mutually hingedly coupled parts and also at least one first receiving space located between the at least two parts and arranged and suitable for receiving lubricant. The invention also relates to a method for lubricating such a chain.

Such a chain is known, in many embodiments and for all kinds of applications, for example GB2123518A, DE556782C and US6526740B1. For proper operation, the chain must be lubricated for which purpose the at least one receiving space is at least partly filled with lubricant. Lubrication must be repeated with a certain regularity because lubricant leaks from the at least one receiving space to the surroundings over time.

In addition to the time and cost of repeated lubrication, possible contamination of the surroundings, during and/or after lubrication and/or during the use of the chain, is in some cases problematic or extremely undesirable. For example, many slaughterhouses use such chains for transporting slaughtered animals. The slaughtered animals are hung from meat hooks which meat hooks are pulled or pushed along a track by means of such a chain. Because of the ever-higher demands placed on hygiene in slaughterhouses, the chains are not or hardly ever lubricated, which can disrupt their proper functioning. Furthermore, cleaning agents are used that can penetrate the lubricant receiving spaces and dissolve lubricant. As a result, residue may leak or fall on the slaughtered animals or meat products, which residue must be removed. That removal is time-consuming and costly, and therefore very undesirable. The present invention now provides a solution to said problems.

According to the invention, the chain also comprises sealing means arranged and suitable for forming a seal between the at least one first receiving space and the surroundings. In the context of the invention, the term 'surroundings' refers to 'the space outside the circumference of the chain'. In the context of the invention, 'seal' is meant to mean 'a practically hermetic seal'. Thus, lubricant can not leak from the at least one first receiving space to the surroundings. In certain cases, it is then no longer necessary to lubricate the chain during its life or service life. Also, no medium such as a cleaning agent can penetrate the at least one first receiving space from the surroundings.

In a specific first embodiment, wherein the chain comprises a block and a chain bus and a chain pin and a first side plate, and wherein the chain bus is at least partially received in a second receiving space provided for this purpose in the block and wherein the chain pin is at least partly and rotatably with respect to the chain bus being received in the chain bus and wherein the at least one first receiving space is located between the chain bus and the chain pin and wherein the first side plate is connected outside the circumference of the block with the chain pin and extends perpendicular to the chain pin, the sealing means comprise a first sealing ring, the first sealing ring being located between the first side plate and the block and between the at least one first receiving space and the surroundings.

A chain pin can herein extend through a passage provided for this purpose in the first side plate outside a side of the first side plate remote from the chain bus, and the circumference of the passage in the first side plate and/or the circumference of the chain pin adjacent the circumference of the passage in the first side plate can be provided with at least one first groove arranged and suitable for the passage of lubricant. To lubricate the chain, lubricant is then introduced into the at least one first receiving space via a lubricant channel provided for this purpose and lubricant is discharged from the at least first receiving space through the at least one first groove to the surroundings. Thus, the at least one first receiving space can be filled with lubricant.

The chain can herein also comprise a first cap nut which is attached to the end of the part of the chain pin extending outside the first side plate by means of screw thread provided for this purpose, and the sealing means can comprise a second sealing ring, which second sealing ring is situated between the first side plate and the first cap nut and between the at least one first groove and the surroundings. A 'cap nut' is, according to a common definition, 'a nut which is closed on one side and also functions as a cap'. For lubricating the chain, the first cap nut is then removed from the part of the chain pin extending outside the first side plate and lubricant is then introduced into the at least one first receiving space via the lubricating channel and lubricant is discharged from the at least one first receiving space via the at least one first groove to the surroundings. Thus, the at least one first receiving space can be filled with lubricant.

In a specific second embodiment, wherein the chain also comprises a second side plate and wherein the second side plate is connected outside the circumference of the block with the chain pin and extends perpendicularly to the chain pin and wherein the chain pin extends through a passage provided for this purpose in the second side plate outside a side of the second side plate facing away from the chain bus, the circumference of the passage in the second side plate and/or the circumference of the chain pin adjacent the circumference of the passage in the second side plate is provided with at least one second groove arranged and suitable for the passage of lubricant. For lubricating the chain, the first cap nut is removed from the part of the chain pin extending outside the first side plate, and lubricant is then introduced into the at least one first receiving space via the lubricating channel and lubricant is discharged from the at least one first receiving space via the at least one first groove to the surroundings, after which the first cap nut is again mounted on the end of the part of the chain pin extending outside the first side plate. Next, more lubricant is introduced into the at least one first receiving space via the lubricating channel, and lubricant is discharged from the at least one first receiving space to the surroundings via the at least one second groove of lubricant. Thus, the at least one first receiving space can be completely filled with lubricant with more certainty.

The invention is illustrated in the following by means of non-limitative examples. In the drawings:

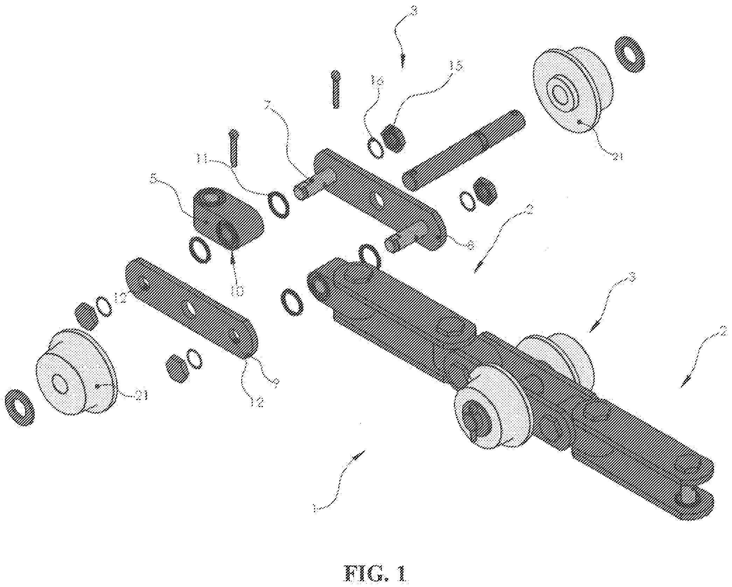

- figure 1 shows a perspective exploded view of a part of a chain according to the invention;

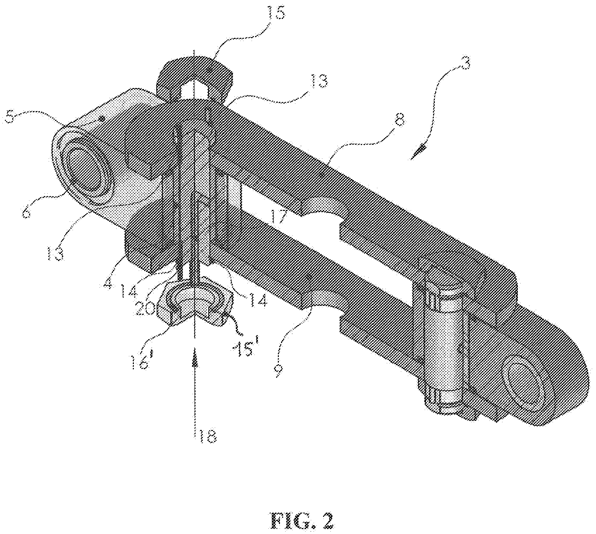

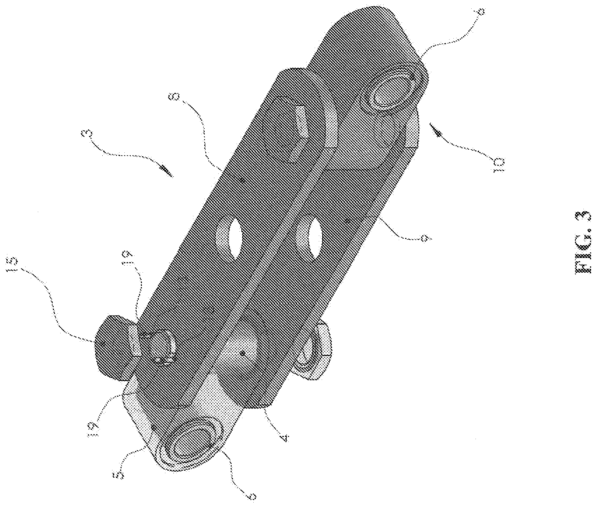

- figures 2 and 3 show partly cut-out perspective views of a part of the chain during lubrication; and

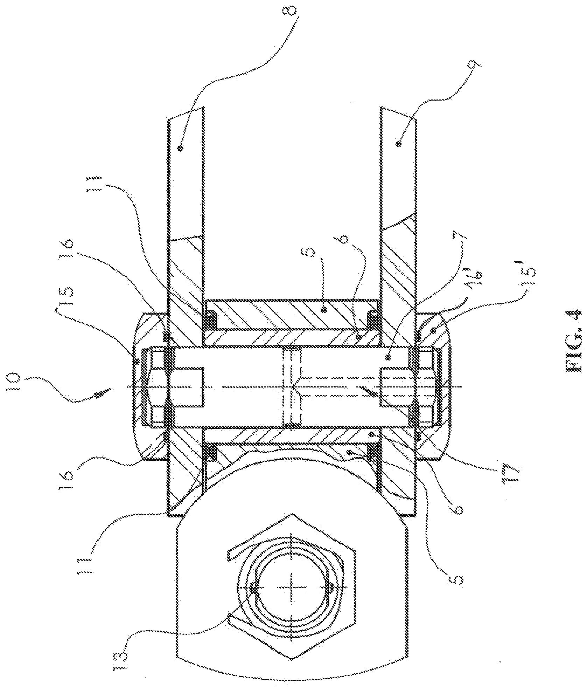

- figure 4 shows a cross-section and partly cut-away view of a part of the chain.

The chain (1) comprises a number of mutually hingedly coupled parts (2,3), hingedly in the given example along two orthogonal pivot axes. To this end, the chain (1) is made up of blocks (5), in the given example each with two second receiving spaces (10) extending orthogonally for receiving two orthogonal chain busses (6) therein, in the given example by clamping (press fit). A chain pin (7) is again received in each chain bus (6) and can rotate relative to the chain bus (6) concerned. The chain (1) also comprises first receiving spaces (4) located between the chain bus (6) and the chain pins (7) in which lubricant can be received. The chain (7) also comprises side plates (8,9) each connected to one end of a chain pin (7) and extending perpendicular thereto, namely first side plates (8) each connected to a first end of a chain pin (7) and second side plates (9) each connected to a second end of a chain pin (7). Each chain pin (7) extends outside the side plates (8,9) to which the side plates (8,9) are provided with passages (12). In order to prevent mutual rotation of the side plates (8,9) and the chain pins (7), they are provided with anti-twisting surfaces. The chain (1) is provided with flange rollers (21) mounted on shafts. The chain (1) is built on the basis of the known shape of a standard slaughterhouse chain and is therefore interchangeable in the majority of the already built installations.

According to the invention, the chain (1) also comprises sealing means, here in the form of first sealing rings (11) and second sealing rings (16,16'), which form seals between the first receiving spaces (4) and the surroundings. The first sealing rings (11) are located between the side plates (8,9) and the blocks (5) and between the first receiving spaces (4) and the surroundings, and lie in grooves arranged for this purpose in the blocks (5).

The circumference of each passage (12) in a side plate (8,9) is provided with two grooves (13,14) for the passage of lubricant, two first grooves (13) in each first side plate (8) and two second grooves (14) in each second side plate (9). In other embodiments, this may also be one groove, or one or more grooves may be provided in the circumference of the chain pin adjacent the circumference of a passage in the side plate. The chain (1) also comprises first cap nuts (15) which are screwed onto the ends of the parts of the chain pins (7) extending outside the first side plates (8) by means of screw thread provided for this purpose and second cap nuts (15') which are screwed onto the ends of the parts of the chain pins (7) extending outside the second side plates (9) by means of screw thread provided for this purpose. The second sealing rings (16,16') are located between the side plates (8,9) and the cap nuts (15,15') and between the grooves (13,14) and the surrounding area, and are located in grooves provided for this purpose in the cap nuts (15,15'). Thus the first receiving spaces (4) are completely closed off from the surroundings.

For lubricating the chain (1) according to a method according to the invention, one can proceed as follows. Firstly, the two cap nuts (15,15') are loosened and removed from the ends of a chain pin (7), after which lubricant is introduced into the first receiving space (4) concerned via a lubrication channel (17) provided for this purpose in the chain pin (7), allowing air to escape through the grooves (13,14) concerned. Where the first lubricant escapes (19,20), either from the first grooves (13) concerned or from the second grooves (14) concerned, the cap nut (15,15') concerned is screwed again onto the end concerned of the chain pin (7). Then more lubricant is injected via the lubrication channel (17), which is now forced to the other grooves concerned, either the second grooves (14) concerned or the first grooves (13) concerned. As soon as lubricant also escapes there (20), it can be assumed that the first receiving space (4) concerned is completely filled with lubricant. Thereafter, the cap nut (15',15) concerned can also be screwed again onto the end concerned of the chain pin (7), after which the first receiving space (4) concerned is completely closed again from the surroundings.

It will be clear that the invention is not limited to the examples given, but that within the scope of the invention all kinds of variants that are obvious to a person skilled in the art are possible. Of importance are the practically hermetic seals between the first receiving spaces and the surroundings, and the manner of lubrication with the aid of the grooves in the circumferences of the passages and/or the circumferences of the chain pins and the cap nuts.

### Used reference signs

- 1: chain
- 2,3: parts (of chain)
- 4: first receiving space (for lubricant)
- 5: block
- 6: chain bus
- 7: chain pin
- 8: first side plate
- 9: second side plate
- 10: second receiving space (in block for chainbus)
- 11: first sealing ring (between side plate and block)
- 12: passage (for chain pin in side plate)
- 13: first groove (in first side plate)
- 14: second groove (in second side plate)
- 15,15': cap nut
- 16,16': second sealing ring (between side plate and cap nut)
- 17: lubrication channel
- 18: introducing lubricant (in first receiving space via lubrication channel)
- 19: discharging lubricant (via first groove)
- 20: discharging lubricant (via second groove)
- 21: flange roller

## Claims

1. Chain comprising two mutually hingedly coupled parts (2, 3), comprising side plates (8, 9) and blocks (5), further comprising chain pins (7) for connecting the side plates to the blocks, wherein the chain pins (7) are received in chain buses (6) in the blocks (5) and extend through passages (12) in the side plates, wherein a first receiving space (4), located between the at least two parts for receiving lubricant via a lubrication channel (17) provided for this purpose is located between each chain bus (6) and each chain pin (7), **characterised in that** grooves (13, 14) for the passage of lubricant from the first receiving space (4) are arranged in the side plates (8, 9) or the chain pins (7) in respectively near the circumference of the passages (12) and **in that** sealing means (11, 16, 16') are provided for forming a seal between the first receiving space (4), the grooves (13, 14) and the surroundings.

2. . Chain according to claim 1, wherein the lubrication channel (17) is arranged in the chain pin (7).

3. . Chain according to claim 1 or 2, wherein the sealing means comprise first sealing rings (11), the first sealing rings being located between the side plates (8, 9) and the blocks (5) and between the first receiving space (4) and the surroundings.

4. . Chain according to claim 1, 2 or 3, wherein the chain also comprises cap nuts (15, 15') which are fastened to the end of the part of the chain pin (7) extending outside the side plates by means of screw thread provided for this purpose, and that the sealing means comprises second sealing rings (16, 16') which are located between the side plates and the cap nuts and between the grooves and the surroundings.

5. . Method for lubricating a chain according to one or more of the preceding claims, **characterized by** the steps of introducing lubricant (18) into the first receiving space (4) via the lubrication channel (17) and lubricant being discharged (19) from the receiving space to the surroundings via one or more of the grooves (13, 14).

## Patentansprüche

1. Kette umfassend zwei gelenkig miteinander verbundene Teile (2, 3), mit Seitenplatten (8, 9) und Blöcken (5), die weiterhin Kettenbolzen (7) zur Verbindung der Seitenplatten mit den Blöcken umfasst, wobei die Kettenbolzen (7) in Kettenschienen (6) in den Blöcken (5) aufgenommen sind und sich durch Durchlässe (12) in den Seitenplatten erstrecken, wobei sich zwischen jeder Kettenschiene (6) und jedem Kettenbolzen (7) ein zwischen den mindestens zwei Teilen befindlicher erster Aufnahmeraum (4) zur Aufnahme von Schmiermittel über einen dafür vorgesehenen Schmierkanal (17) befindet, **dadurch gekennzeichnet, dass** in den Seitenplatten (8, 9) oder den Kettenbolzen (7) jeweils in Umfangsnähe der Durchlässe (12) Nuten (13, 14) für den Durchtritt von Schmiermittel aus dem ersten Aufnahmeraum (4) angeordnet sind und dass Dichtmittel (11, 16, 16') zur Abdichtung zwischen dem ersten Aufnahmeraum (4), den Nuten (13, 14) und der Umgebung vorgesehen sind.

2. Kette nach Anspruch 1, wobei der Schmierkanal (17) im Kettenbolzen (7) angeordnet ist.

3. Kette nach Anspruch 1 oder 2, wobei die Dichtmittel erste Dichtringe (11) umfassen, wobei die ersten Dichtringe zwischen den Seitenplatten (8, 9) und den Blöcken (5) und zwischen dem ersten Aufnahmeraum (4) und der Umgebung angeordnet sind.

4. Kette nach Anspruch 1, 2 oder 3, **dadurch gekennzeichnet, dass** die Kette auch Hutmuttern (15, 15') umfasst, die am Ende des Teils des Kettenbolzens (7), der sich außerhalb der Seitenplatten erstreckt, mittels eines für diesen Zweck vorgesehenen Gewindes befestigt sind, und dass die Dichtmittel zweite Dichtringe (16, 16') umfassen, die zwischen den Seitenplatten und den Hutmuttern und zwischen den Nuten und der Umgebung angeordnet sind.

5. Verfahren zum Schmieren einer Kette nach einem oder mehreren der vorhergehenden Ansprüche, **gekennzeichnet durch** die Schritte des Einleitens von Schmiermittel (18) in den ersten Aufnahmeraum (4) über den Schmierkanal (17) und des Austragens (19) von Schmiermittel aus dem Aufnahmeraum in die Umgebung über eine oder mehrere der Nuten (13, 14).

## Revendications

1. Chaîne comprenant deux parties (2, 3) couplées l'une à l'autre de manière articulée, comprenant des plaques latérales (8, 9) et des blocs (5), comprenant en outre des axes de chaîne (7) pour relier les plaques latérales aux blocs, les axes de chaîne (7) étant reçus dans des douilles de chaîne (6) dans les blocs (5) et s'étendant à travers des passages (12) dans les plaques latérales, un premier espace de réception (4), situé entre lesdites au moins deux parties pour recevoir du lubrifiant via un canal de lubrification (17) prévu à cet effet, étant situé entre chaque douille de chaîne (6) et chaque axe de chaîne (7), **caractérisée en ce que** des rainures (13, 14) pour le passage de lubrifiant provenant du premier espace de réception (4) sont disposées dans les plaques latérales (8, 9) ou les axes de chaîne (7) respectivement à proximité de la circonférence des passages (12), et **en ce que** des moyens d'étanchéité (11, 16, 16') sont prévus pour former un joint entre le premier espace de réception (4), les rainures (13, 14) et l'environnement.

2. Chaîne selon la revendication 1, dans laquelle le canal de lubrification (17) est disposé dans l'axe de la chaîne (7).

3. Chaîne selon la revendication 1 ou 2, dans laquelle les moyens d'étanchéité comprennent des premières bagues d'étanchéité (11), les premières bagues d'étanchéité étant situées entre les plaques latérales (8, 9) et les blocs (5) et entre le premier espace de réception (4) et l'environnement.

4. Chaîne selon la revendication 1, 2 ou 3, dans laquelle la chaîne comprend en outre des écrous borgnes (15, 15') qui sont fixés à l'extrémité de la partie de l'axe de chaîne (7) qui s'étend à l'extérieur des plaques latérales au moyen d'un filetage prévu à cet effet, et en ce que les moyens d'étanchéité comprennent des secondes bagues d'étanchéité (16, 16') qui sont situés entre les plaques latérales et les écrous borgnes et entre les rainures et l'environnement.

5. Procédé de lubrification d'une chaîne selon l'une ou plusieurs des revendications précédentes, **caractérisé par** les étapes consistant à introduire du lubrifiant (18) dans le premier espace de réception (4) via le canal de lubrification (17) et à évacuer (19) le lubrifiant de l'espace de réception vers l'environnement via une ou plusieurs des rainures (13, 14).
